# EUROPÄISCHE PATENTSCHRIFT

(11) **EP 1 762 120 B1**
(45) Veröffentlichungstag und Bekanntmachung des Hinweises auf die Patenterteilung: **14.11.2007**
(21) Anmeldenummer: 05769680.9
(22) Anmeldetag: 04.08.2005
(51) Int. Cl.: H04R 27/00

(54) **SPRACHKONFERENZVORRICHTUNG, SPRACHKONFERENZSYSTEM UND VERFAHREN ZUR REALISIERUNG EINER SPRACHKONFERENZ**
AUDIO CONFERENCING DEVICE, AUDIO CONFERENCING SYSTEM AND METHOD FOR CARRYING OUT AN AUDIO CONFERENCE
DISPOSITIF DE CONFERENCE VOCALE, SYSTEME DE CONFERENCE VOCALE ET PROCEDE DE REALISATION D'UNE CONFERENCE VOCALE

(30) Priorität: 04.08.2004 DE 102004037856
(43) Veröffentlichungstag der Anmeldung: 14.03.2007
(73) Patentinhaber: Fraunhofer-Gesellschaft zur Förderung der angewandten Forschung e.V., 80686 München (DE)
(72) Erfinder: HUPP, Jürgen, 90425 Nürnberg (DE); TITTEL, Martin, 91301 Forchheim (DE); HU, Xuelei, 91052 Erlangen (DE); STURM, Roland, 90491 Nürnberg (DE); KAUPPERT, Thomas, 90489 Nürnberg (DE)
(74) Vertreter: Schoppe, Fritz
(86) Internationale Anmeldenummer: PCT/EP2005/008469
(87) Internationale Veröffentlichungsnummer: WO 2006/015801

(56) Entgegenhaltungen:
- EP-A- 0 677 962
- DE-A1- 10 113 088
- DE-U1-9202004 012 21
- US-A- 5 913 062
- US-B1- 6 329 908

## Beschreibung

Die vorliegende Erfindung bezieht sich im allgemeinen auf eine Sprachkonferenzvorrichtung und ein Verfahren zur Realisierung einer Sprachkonferenz, im speziellen auf ein verteiltes digitales drahtloses Sprachkonferenzsystem.

Funkbasierte Sprachkonferenzsysteme werden überall dort eingesetzt, wo eine Verständigung innerhalb einer Personengruppe auf direktem Wege aufgrund zu großer Entfernung, zu hohem Lärmpegel oder anderer Gründe nicht möglich ist. Mehrere Personen sollen über drahtlos angebundene Hör-/Sprechgarnituren miteinander sprechen können, wobei jeder jederzeit alle anderen Teilnehmer hören kann. Das heißt, zu jedem Teilnehmer besteht eine Duplex-Sprachverbindung.

Bei einem modernen Sprachkonferenzsystem soll also eine quasi-verzögerungsfreie und vollduplexfähige Sprachverbindung zwischen einer großen Anzahl an Hör-/Sprechstellen hergestellt werden. Dabei ist es aus ökonomischen Gründen wichtig, den Installationsaufwand so gering wie möglich zu halten. Weiterhin ist es sehr wichtig, dass das System modular aufgebaut ist und flexibel zu einem System von quasi beliebiger Größe erweitert werden kann. Daneben sollen bereits vorhandene Ressourcen weiterverwendet werden können. Dies betrifft auf Kundenseite insbesondere schon vorhandene Verkabelung sowie Endgeräte. Auf Seiten des Herstellers sollen schon vorhandene Schaltungskonzepte weiterverwendet werden. Die verwendete Schaltungstechnik soll bei geringen Kosten einfach realisierbar sein. Auch eine hervorragende Sprachqualität wird heute von einem modernen Sprachkonferenzsystem erwartet. Insbesondere müssen auf der Übertragungsstrecke und in einem Konferenzknoten eingekoppelte Störsignale sehr gering sein. Schließlich ist es bei drahtlosen Systemen nötig, die zur Verfügung stehenden Funkressourcen möglichst effektiv zu nutzen. Die Summe dieser Anforderungen macht die Weiterentwicklung der bisher bestehenden Konzepte für Sprachkonferenzsysteme nötig.

Gemäß dem Stand der Technik werden heute üblicherweise Sprachkonferenzsysteme mit analog gekoppelten Basisstationen oder drahtlose DECT-Nebenstellenanlagen verwendet. Bei Konferenzsystemen mit analog gekoppelten Basisstationen stehen die mit einer Basisstation verbundenen Mobilteile in Konferenz. Mehrere Basisstationen werden analog gekoppelt. Die dabei benötigte Schaltung zur Konferenzbildung beinhaltet analoge Schaltungstechnik, welche mit hohem Aufwand die Einkopplung von Störungen in die verwendeten Analogsignale verhindern soll. Dies erfordert aufwendige Filter und ist nicht in idealer Weise möglich. Bei größerer Teilnehmerzahl würden sich die Störgeräusche bis zur Unbrauchbarkeit des Systems addieren. Konferenzsysteme mit analog gekoppelten Basisstationen erfüllen somit die hohen Anforderungen an moderne Sprachkonferenzsysteme nicht.

Der Installationsaufwand ist durch die Notwendigkeit zur Verwendung gut geschirmter Kabel sehr hoch. Selbst bei einer geringen Zahl an Teilnehmern ist die Sprachqualität nicht zufriedenstellend und Störeinflüsse können leicht eingekoppelt werden. Ebenso ist die flexible Erweiterung auf eine große Zahl von Teilnehmern aufgrund der Problematik der Störeinflüsse nicht einfach möglich. Schließlich bringt heute die Verwendung von analoger Schaltungstechnik im Vergleich zu digitalen Schaltungen deutlich höhere Kosten mit sich.

Neben den eben beschriebenen Konferenzsystemen mit analog gekoppelten Basisstationen sind heute drahtlose DECT-Nebenstellenanlagen mit digitaler Sprachübertragung üblich. Die Konferenzschaltung erfolgt hierbei in einer Zentraleinheit. Auch dies bringt einige Nachteile mit sich. Insbesondere ist die Verwendung einer Zentraleinheit, die eine große Zahl von Funkverbindungen gleichzeitig aufrechterhalten kann, sehr kostenintensiv. Eine modulare Erweiterung des Systems ist nur schwer möglich. Ebenso bringt die Verwendung einer Zentraleinheit eine räumliche Beschränkung des Konferenzsystems mit sich. Schließlich unterscheidet sich der innere Aufbau einer Zentraleinheit stark von dem einer Basisstation eines normalen, d. h. nicht konferenzfähigen, schnurlosen Telefonsystems. Dies führt zu hohen Kosten.

Das Dokument DE 10113088 A1 offenbart ein Beschallungssystem für Konferenzgebäuden mit einem Basis-Konferenzblock, der mehrere Signaltore aufweist, die jeweils einen Eingang und einen Ausgang für ein Sprachsignal umfassen.

Die Realisierung einer Konferenzschaltung innerhalb einer Zentraleinheit erfolgt herkömmlicherweise durch Verwendung eines Signalprozessors, der ausgelegt ist, um die für die Realisierung eines Sprachkonferenzblocks nötigen Berechnungen durchzuführen. Ein solcher Signalprozessor ist beispielsweise der Typ SC14428 von National Semiconductor. Für weitere Details zu den Fähigkeiten des Signalprozessors sei hier auf die zugehörige Dokumentation verwiesen.

Ausgehend von diesem Stand der Technik liegt der vorliegenden Erfindung die Aufgabe zugrunde, eine modulare digitale Sprachkonferenzvorrichtung, ein Sprachkonferenzsystem sowie ein Verfahren zum Betrieb derselben zu schaffen.

Diese Aufgabe wird durch eine Sprachkonferenzvorrichtung gemäß Anspruch 1, ein Sprachkonferenzsystem gemäß Anspruch 13 sowie durch ein Verfahren gemäß Anspruch 29 gelöst.

Die vorliegende Erfindung schafft eine Sprachkonferenzvorrichtung mit mindestens einem Basis-Konferenzblock, der drei oder mehr Signaltore aufweist, die jeweils einen Eingang für ein digitalisiertes Sprachsignal und einen Ausgang für ein digitalisiertes Sprachsignal umfassen, wobei ein Basis-Konferenzblock so ausgelegt ist, dass an einem Signaltor unter Zuhilfenahme einer Koppeleinrichtung wahlweise ein Endgerät oder ein weiterer Basis-Konferenzblock zur Realisierung einer bezüglich der Teilnehmerzahl oder räumlich erweiterten Sprachkonferenzvorrichtung angekoppelt werden kann und wobei ein Basis-Konferenzblock ausgelegt ist, um eine Sprachkonferenz zwischen den an denselben angekoppelten Endgeräten oder Basis-Konferenzblöcken zu ermöglichen und einer Fernkoppeleinrichtung, die ausgelegt ist, um einen Basis-Konferenzblock mit mindestens einem weiteren räumlich entfernten Basis-Konferenzblock zu koppeln, um eine räumlich ausgedehnte Sprachkonferenz zu ermöglichen.

Daneben schafft die vorliegende Erfindung ein Sprachkonferenzsystem sowie Verfahren zum Betreiben eines Sprachkonferenzsystems.

Die vorliegende Erfindung beruht auf der Erkenntnis, dass bei einer volldigitalen Realisierung der Sprachsignalverarbeitung und -übertragung eine hohe Sprachqualität sichergestellt, Störungen wirkungsvoll unterdrückt und die Systemkosten durch Verwendung digitaler Schaltungstechnik reduziert werden können. Weiterhin basiert die vorliegende Erfindung auf der Erkenntnis, dass durch Verwendung von flexibel beschaltbaren Basis-Konferenzblöcken mit geringem Aufwand ein modulares, quasi beliebig erweiterbares Sprachkonferenzsystem aufgebaut werden kann. Eine dezentrale Bildung von Teilkonferenzen, die dadurch ermöglicht wird, dass räumlich getrennte Basis-Konferenzblöcke gekoppelt werden können, macht eine aufwendige Zentraleinheit überflüssig. Einzelne Knoten des Konferenzsystems unterscheiden sich nur noch in der Software, nicht aber in der Hardware.

Die Übertragung der digitalen Sprachsignale zwischen mehreren Basis-Konferenzblöcken, die durch den Einsatz einer Fernkoppeleinrichtung ermöglicht wird, erlaubt eine räumlich erweiterte Sprachkonferenz mit hoher Sprachqualität, wobei ein einzelner Basis-Konferenzblock eine lokale Teilkonferenz berechnet, was zu einer Verteilung des Rechenaufwands führt und die zu übertragende Datenmenge gegenüber herkömmlichen zentralisierten Konferenzsystemen verringert.

Somit weicht das vorliegende Sprachkonferenzsystem von den gemäß dem Stand der Technik bekannten Systemen insbesondere dadurch ab, dass Sprachübertragung und Sprachverarbeitung vollkommen digital erfolgen, ohne dass dafür eine durch hardwaremäßige Besonderheiten definierte Zentralstation nötig ist. Vielmehr erfolgt ein Großteil der Signalverarbeitung dezentral. Eine solche Sprachkonferenzvorrichtung bzw. ein solches Sprachkonferenzsystem bringt eine Reihe an Vorteilen mit sich. Insbesondere ist die Sprachqualität durch die digitale Verarbeitung und Übertragung hoch und die Anfälligkeit für Störungen gering. Die verteilte Realisierung verringert den Hardwareaufwand und die Installationskosten, da die Verkabelung sich gegenüber herkömmlichen Systemen deutlich vereinfacht. Eine flexible Erweiterung ist durch die Modularität gewährleistet. Ein Knoten in einem solchen verteilten Sprachkonferenzsystem unterscheidet sich abgesehen von einer die räumliche Erweiterung ermöglichenden Fernkoppeleinrichtung hardwaremäßig nur wenig von dem in einem normalen Telefonsystem, so dass vorhandene Hardware mit nur geringen Modifikationen weiter genutzt werden kann. Es ist möglich, ein Sprachkonferenzsystem aus einer Mehrzahl von hardwaremäßig im Wesentlichen identischen räumlich verteilten Einheiten zusammenzusetzen.

Bei einem Ausführungsbeispiel der vorliegenden Sprachkonferenzvorrichtung ist ein Basis-Konferenzblock so ausgelegt, dass an jedem Ausgang eines Signaltors ein auf digitalem Wege gebildetes Summensignal der Eingangssignale der jeweils anderen Signaltore in digitaler Form anliegt. Dies bringt den Vorteil, dass durch die digitale Verarbeitung eine sehr einfache Summenbildung möglich ist. Weiterhin kann eine Signalreflexion, d. h. die Ausgabe des von dem Eingang eines Signaltors eingelesenen Sprachsignals an den Ausgang desselben Signaltors unterbunden werden. Schließlich ermöglicht eine derartige Auslegung des Basis-Konferenzblocks eine beliebige Erweiterung des Systems, wobei auf allen Verbindungsstrecken nur digitale Signale übertragen werden müssen.

Bei einem weiteren bevorzugten Ausführungsbeispiel werden eines oder mehrere der Endgeräte über eine drahtlose Verbindung an einen Basis-Konferenzblock angekoppelt, was durch eine geeignete Auslegung der Fernkoppeleinrichtung ermöglicht wird. Insbesondere kann die drahtlose Verbindung zu einem oder mehreren Endgeräten gemäß dem DECT-Standard oder einem daran angelehnten Standard erfolgen. Die drahtlose Verbindung bietet den Vorteil, dass sich die Konferenzteilnehmer frei im Raum bewegen können. Die Übertragung der Sprachsignale gemäß einem digitalen Standard ermöglicht hierbei eine hohe Sprachqualität bei guter Unterdrückung von Störungen und guter Ausnutzung der zur Verfügung stehenden Frequenzressourcen. Die Umsetzung der Audiosignale in digitale Signale und umgekehrt erfolgt direkt in dem Endgerät. Erfolgt ferner die drahtlose Anbindung gemäß dem DECT-Standard oder einem daran angelehnten Standard, so können vorhandene bzw. kostengünstig verfügbare Standard-Endgeräte und Basisstationen verwendet werden.

Bei einem weiteren Ausführungsbeispiel wird eine Hör- und Sprechstelle über eine Einrichtung zur Umwandlung von analogen Signalen in digitale Signale und eine Einrichtung zur Umwandlung von digitalen Signalen in analoge Signale an einen Basis-Konferenzblock angekoppelt. Dies ermöglicht den Betrieb einer Hör- und Sprechstelle, die sich an demselben Ort wie der Basis-Konferenzblock befindet. Somit kann bei geringem Kostenaufwand ein weiterer stationärer Benutzer in die Sprachkonferenz miteingebunden werden.

Bei einem weiteren Ausführungsbeispiel sind ein oder mehrere weitere Basis-Konferenzblöcke über eine drahtlose Verbindung an einen ersten Basis-Konferenzblock angekoppelt. Dies bringt den Vorteil, dass die Sprachkonferenzvorrichtung ohne irgendwelchen Installationsaufwand erweitert werden kann. Eine solche Lösung bietet weiterhin den Vorteil, dass die zur Verfügung stehenden Frequenzressourcen effektiv ausgenutzt werden können. Die Sendeleistung der Mobilteile muss lediglich groß genug sein, um den nächstgelegenen Basis-Konferenzblock zu erreichen, während die gegebenenfalls weiter entfernten Basis-Konferenzblöcke über eine Funkverbindung mit größerer Sendeleistung miteinander kommunizieren.

Bei einem weiteren bevorzugten Ausführungsbeispiel sind ein oder mehrere weitere Basis-Konferenzblöcke über einen drahtgebundenen Bus an einen ersten Basis-Konferenzblock angekoppelt. Wiederum kommt der Fernkoppeleinrichtung die Aufgabe zu, die Verbindung zu ermöglichen und zu verwalten. Insbesondere ist es vorteilhaft, wenn der drahtgebundene Bus für die Übertragung mehrerer Sprachkanäle in Zeitmultiplex ausgelegt ist. Eine solche Anordnung bringt den Vorteil, dass eine Sprachkonferenzvorrichtung beliebig räumlich erweitert werden kann, ohne dass dabei Frequenzressourcen belegt werden. Mit Hilfe eines drahtgebundenen Busses können fast beliebige Distanzen überbrückt werden. Insbesondere ist der Übergang zu Weitverkehrs-Telefonnetzen möglich. Die Übertragung von mehreren Sprachkanälen in Zeitmultiplex auf einem Bus ermöglicht es in vorteilhafter Weise, bei geringem Installationsaufwand eine Mehrzahl an Verbindungen herzustellen. Die Verwendung des Bus-Prinzips bei der Verkabelung befreit hierbei von dem Zwang, schon bei der Systeminstallation festlegen zu müssen, welcher der Kommunikationsknoten welche Funktion übernimmt. Vielmehr ist im Hinblick auf die Installation jedes angeschlossene Gerät gleichwertig, und es wird erst beim Betrieb des Systems entschieden, welche Funktion dem jeweiligen Gerät bei der Datenübertragung zukommt. Die Verwendung eines Zeitmultiplex-Verfahrens verringert den Hardwareaufwand gegenüber Frequenzmultiplexverfahren, bei denen eine aufwendige Modulation und Frequenzumsetzung nötig ist. Weiterhin ist ein Zeitmultiplex-Verfahren mit fest definierten Zeitschlitzen für jeden Übertragungskanal uneingeschränkt realzeitfähig, was für andere Netzwerksysteme, die beispielsweise Kollisionserkennung verwenden, nicht gewährleistet ist.

Bei einem weiteren bevorzugten Ausführungsbeispiel ist ein Basis-Konferenzblock durch einen Prozessor in Verbindung mit einer geeigneten Betriebssoftware realisiert. Der Prozessor kann dabei weiterhin zur Bereitstellung einer Benutzeroberfläche, zur Codierung von Daten oder zur Realisierung eines Übertragungsprotokolls verwendet werden. Eine solche Anordnung bringt den Vorteil, dass ein schon vorhandener Prozessor für die Realisierung der Sprachkonferenz verwendet werden kann. Entsprechend wird keine weitere als die schon vorhandene Hardware zur Realisierung der Sprachkonferenz benötigt. Zusätzlich bietet die Realisierung eines Basis-Konferenzblocks mit Hilfe eines Prozessors gegenüber einer festverdrahteten Lösung den Vorteil, dass Änderungen der Funktionalität alleine durch Veränderung der Software erzielt werden können. Dies verringert Entwicklungskosten und ermöglicht ein sehr universelles und flexibles System, das sogar zur Laufzeit umkonfiguriert werden kann.

Bei einem weiteren bevorzugten Ausführungsbeispiel wird ein Basis-Konferenzblock mit einer vorbestimmten Anzahl von Signaltoren dadurch gebildet, dass mehrere Unter-Konferenzblöcke, die jeweils weniger als die vorbestimmte Anzahl an Signaltoren aufweisen, gekoppelt sind. Dieses Konzept bietet den Vorteil, dass ein Basis-Konferenzblock modular aus mehreren gleichartigen Unter-Konferenzblöcken zusammengestellt werden kann. Entsprechend genügt es, mehrere kleine Konferenzblöcke zur Verfügung zu stellen. Das Ergebnis ist eine Vereinheitlichung der benötigten Hardware bzw. Software, was eine wesentliche Kostenverringerung mit sich bringt. Weiterhin ist dieses Konzept die Grundlage für verteilte Systemrealisierungen.

Ein Sprachkonferenzsystem umfasst mindestens zwei Basis-Konferenzblöcke wie oben beschrieben sowie eine Einrichtung, über die die Basis-Konferenzblöcke miteinander gekoppelt sind. Bei einem bevorzugten Ausführungsbeispiel eines Sprachkonferenzsystems sind mindestens zwei der Basis-Konferenzblöcke räumlich getrennt. Dies ermöglicht die Realisierung eines verteilten Sprachkonferenzsystems.

Bei einem Ausführungsbeispiel sind mindestens zwei der Basis-Konferenzblöcke über eine drahtlose Verbindung gekoppelt. Dies ermöglicht wiederum eine flexible Erweiterung des Sprachkonferenzsystems ohne Installationsaufwand.

Bei einem weiteren Ausführungsbeispiel sind mindestens zwei der Basis-Konferenzblöcke über einen drahtgebundenen Bus gekoppelt. Insbesondere ist es vorteilhaft, wenn der drahtgebundene Bus für die Übertragung mehrerer Sprachkanäle im Zeitmultiplex ausgelegt ist. Vorteile einer solchen Ausführungsform wurden bereits oben ausführlich erläutert.

Bei einem weiteren Ausführungsbeispiel weist das Sprachkonferenzsystem mindestens zwei Endgeräte auf, wobei zwischen allen vorhandenen Endgeräten eine Duplex-Sprachverbindung besteht. Dies bietet den Vorteil, dass alle an der Sprachkonferenz teilnehmenden Personen gleichzeitig hören und sprechen können. Damit bildet das Sprachkonferenzsystem die Anwesenheit aller teilnehmenden Personen an einem gemeinsamen Ort in guter Weise nach.

Bei einem weiteren Ausführungsbeispiel eines Sprachkonferenzsystems sind einer oder mehrere der Basis-Konferenzblöcke Teil einer DECT-Basisstation. Weiterhin können eines oder mehrere der Endgeräte DECT-Mobilstationen sein. Eine solche Ausführungsform bietet den Vorteil, dass ein Sprachkonferenzsystem ohne großen Aufwand in ein bestehendes DECT-System integriert werden kann. Die Kompatibilität insbesondere zu bestehenden Endgeräten ist damit gewährleistet. Eine digitale und störungsarme drahtlose Übertragung des Sprachsignals ist ebenso sichergestellt. Weiterhin ist der herstellerseitige Aufwand zur Entwicklung der Hardware für das Telefonkonferenzsystem gering, da bestehende Komponenten mit nur geringen Änderungen weiterverwendet werden können.

Bei einem weiteren bevorzugten Ausführungsbeispiel sind die DECT-Basisstationen und die DECT-Mobilstationen hardwaremäßig identisch. Dies bietet den Vorteil, dass die Anzahl an Hardwarevarianten in dem System verringert wird, was die Herstellungskosten senkt und eine flexible Umkonfigurierung des Systems zu jedem Zeitpunkt ermöglicht. Die Systemeigenschaften werden lediglich durch Software definiert, die problemlos ausgetauscht werden kann.

Die vorliegende Erfindung schafft weiterhin zwei Verfahren zum Betreiben einer Sprachkonferenzvorrichtung oder eines Sprachkonferenzsystems. Die Verfahren werden insbesondere beim Betrieb eines Basis-Konferenzblocks ausgeführt, wobei die Realisierung sowohl hardwaremäßig als auch durch einen Mikroprozessor in Verbindung mit einem geeigneten Programm erfolgen kann. Der Vorteil der vorliegenden Verfahren besteht darin, dass in sehr einfacher und universeller Weise die zur Realisierung einer Sprachkonferenz nötige Bearbeitung von digitalisierten Sprachsignalen ausgeführt werden kann. Zwei Verfahren sind möglich, wobei das erste Verfahren gemäß Anspruch 17 vorteilhaft ist, wenn nur eine lokale Sprachkonferenz realisiert werden soll, oder wenn die Anforderungen an die zeitliche Koordination der Sprachsignale gering sind. Bei einem zweiten Verfahren gemäß Anspruch 18 wird die Verarbeitung der von lokalen Endgeräten gelieferten Daten und die Verarbeitung der von anderen Basis-Konferenzblöcken gelieferten Summensignale in getrennten Schritten durchgeführt. Ein solches Verfahren ist vorteilhaft, wenn die Anforderung an die zeitliche Koordination der Sprachsignale in einem räumlich weit verteilten Sprachkonferenzsystem sehr hoch sind. Insbesondere können bei einem solchen Verfahren auf dem Übertragungsweg auftretende Verzögerungen praktisch vollständig ausgeglichen werden, so dass alle Teilnehmer unabhängig von ihrem gegenwärtigen Aufenthaltsort und von ihrer Entfernung zueinander gleichzeitig zu hören sind.

Bevorzugte Ausführungsbeispiele der vorliegenden Erfindung werden nachfolgend Bezug nehmend auf die beiliegenden Zeichnungen näher erläutert. Es zeigen:
- Fig. 1: einen Systemplan eines Ausführungsbeispiels eines Sprachkonferenzsystems;
- Fig. 2: ein Blockschaltbild eines Ausführungsbeispiels eines Basis-Konferenzblocks mit maximal vier Teilnehmern;
- Fig. 3: ein Blockschaltbild eines Ausführungsbeispiels eines Konferenzblocks mit sechs Teilnehmern;
- Fig. 4: ein Blockschaltbild eines Ausführungsbeispiels eines Konferenzblocks mit neun Teilnehmern;
- Fig. 5: ein Ablaufdiagramm eines Ausführungsbeispiels eines erfindungsgemäßem Verfahrens zum Betrieb eines Sprachkonferenzsystems.

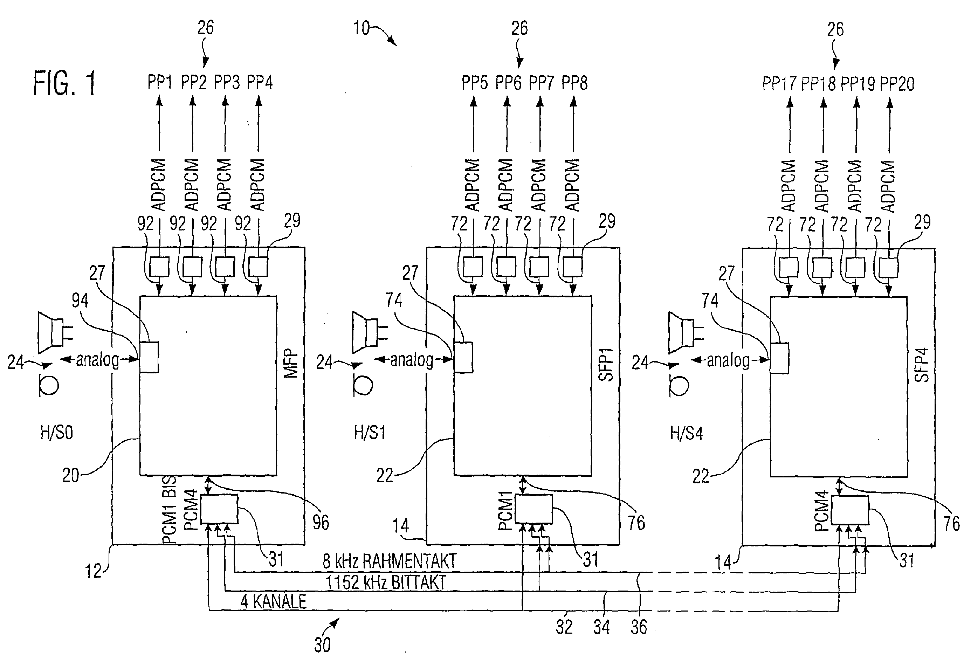

Fig. 1 zeigt einen Systemplan eines Ausführungsbeispiels eines Sprachkonferenzsystems, das in seiner Gesamtheit mit 10 bezeichnet wird. Das Sprachkonferenzsystem umfasst eine Master-Basisstation 12 sowie vier gleichartige Slave-Basisstationen 14, von denen hier zwei stellvertretend gezeigt sind. Kern der Master-Basisstation 12 ist ein Konferenzblock 20 mit neun Eingängen. Kern einer Slave-Basisstation ist ein Konferenzblock 22 mit sechs Eingängen. An die Master-Basisstation 12 sowie an jede der Slave-Basisstationen 14 sind je eine Hör-/Sprechstelle 24 und je vier Mobilteile 26 angekoppelt, die digitale Audiosignale über eine bidirektionale Funkverbindung übertragen können. Die Hör-/Sprechstellen 24 sind hierbei auf analogem Wege mit den jeweiligen Konferenzblöcken verbunden, während die digitalisierten Sprachsignale mit den DECT-Mobilteilen 26 ADPCM-codiert ausgetauscht werden. ADPCM steht hierbei für adaptive differential pulse code modulation. Die Ankopplung der Hör-/Sprechstellen 24 erfolgt über Einrichtungen 27 zur Umwandlung von analogen Signalen in digitale Signale und umgekehrt, die Ankopplung der DECT-Mobilteile 26 erfolgt über Funkkoppeleinrichtungen 29. Die Slave-Basisstationen 14 sind mit der Master-Basisstation 12 über einen seriellen Bus 30 verbunden. Die Bereitstellung und Verarbeitung der Bussignale übernimmt dabei in allen Basisstationen 12,14 je eine Fernkoppleinrichtung 31. Der serielle Bus 30 umfasst im Wesentlichen drei Leitungen, eine Datenleitung 32, auf der die Daten von vier Sprachkanälen in Zeitmultiplex übertragen werden, eine Leitung 34 für den Bittakt und eine Leitung 36 für den Rahmentakt.

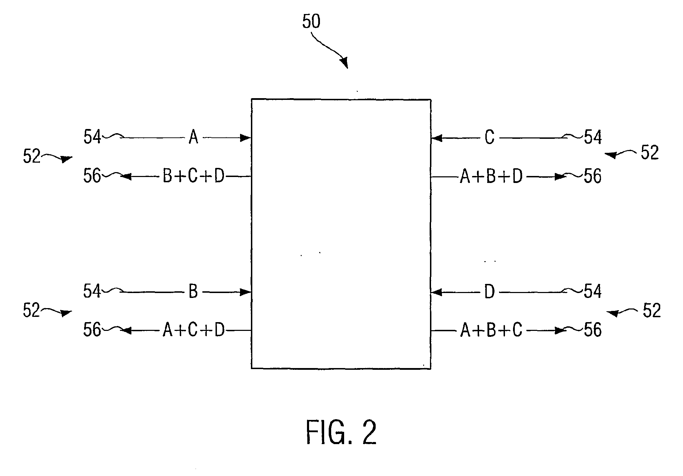

Kern der Master-Basisstation 12 ist ein Konferenzblock mit neun Teilnehmern 20, Kern einer Slave-Basisstation 14 ist ein Konferenzblock 22 mit sechs Teilnehmern. Aufbau und Funktionsweise der Konferenzblöcke mit neun Teilnehmern und sechs Teilnehmern 20, 22 werden nachfolgend anhand der Fig. 2 - 4 beschrieben, bevor schließlich die Funktionsweise des gesamten Sprachkonferenzsystems 10 gemäß Fig. 1 erläutert wird.

Fig. 2 zeigt ein Blockschaltbild eines Ausführungsbeispiels eines Basis-Konferenzblocks mit maximal vier Teilnehmern, der in seiner Gesamtheit mit 50 bezeichnet ist. Der Basis-Konferenzblock 50 für maximal vier Teilnehmer weist vier Signaltore 52 auf, die jeweils einen Eingang 54 für ein digitalisiertes Sprachsignal und einen Ausgang 56 für ein digitalisiertes Sprachsignal umfassen. Die digitalen Eingangssignale an den vier Signaltoren 52 sind hier mit A, B, C und D bezeichnet. Eine Schaltungsanordnung im Inneren des Basis-Konferenzblocks 50 ist so ausgelegt, dass sie die Eingangssignale 54 von den vier Signaltoren 52 einliest, und an den vier Ausgängen 56 jeweils die Summe der Eingangssignale 54 an den anderen Signaltoren 52 ausgibt. Die Signalverarbeitung im Inneren eines Basis-Konferenzblocks erfolgt hierbei vollständig digital. Der Basis-Konferenzblock realisiert somit die Kerneigenschaften einer Konferenzschaltung. Das Eingangssignal von dem Eingang 54 eines Signaltors 52 wird zu den Ausgängen 56 der jeweils anderen Signaltore 52 übertragen, nicht jedoch zum Ausgang 56 des eigenen Signaltors 52.

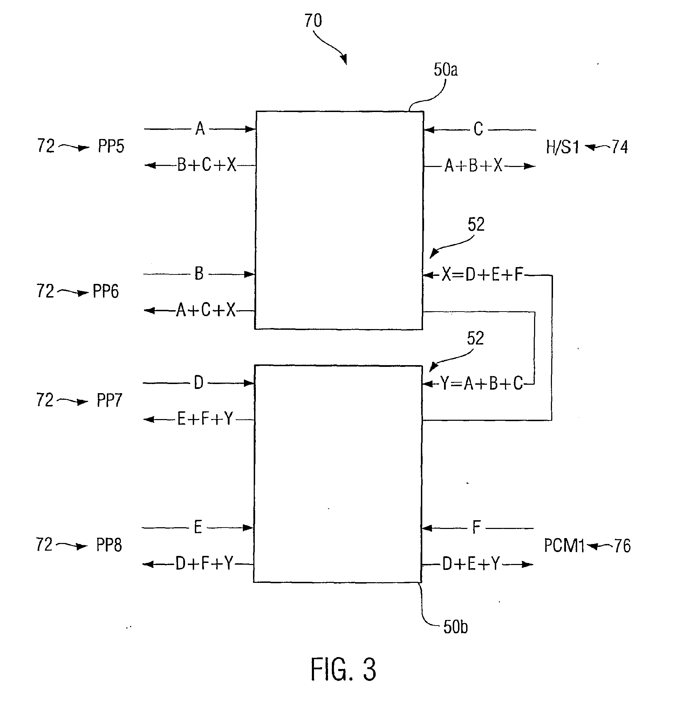

Fig. 3 zeigt ein Blockschaltbild eines Ausführungsbeispiels eines Konferenzblocks mit sechs Teilnehmern, der in seiner Gesamtheit mit 70 bezeichnet ist. Dieser entsteht durch Zusammenschaltung zweier Basis-Konferenzblöcke 50a,50b mit je vier Eingängen. Es stehen damit insgesamt sechs Signaltore 72 zur Verfügung. Jeder Basis-Konferenzblock 50a,50b stellt dabei drei externe Signaltore 72,74,76 zur Verfügung. Über je ein Signaltor 52 der beiden Basis-Konferenzblöcke 50a,50b wird die Verbindung zwischen diesen beiden hergestellt. Wiederum wird durch die Verschaltung und die innere Struktur der Basis-Konferenzblöcke sichergestellt, dass an dem Ausgang eines jeden externen Signaltors 72,74,76 die digital gebildete Summe der Eingangssignale der jeweils anderen Signaltore 72,7.4,76 anliegt.

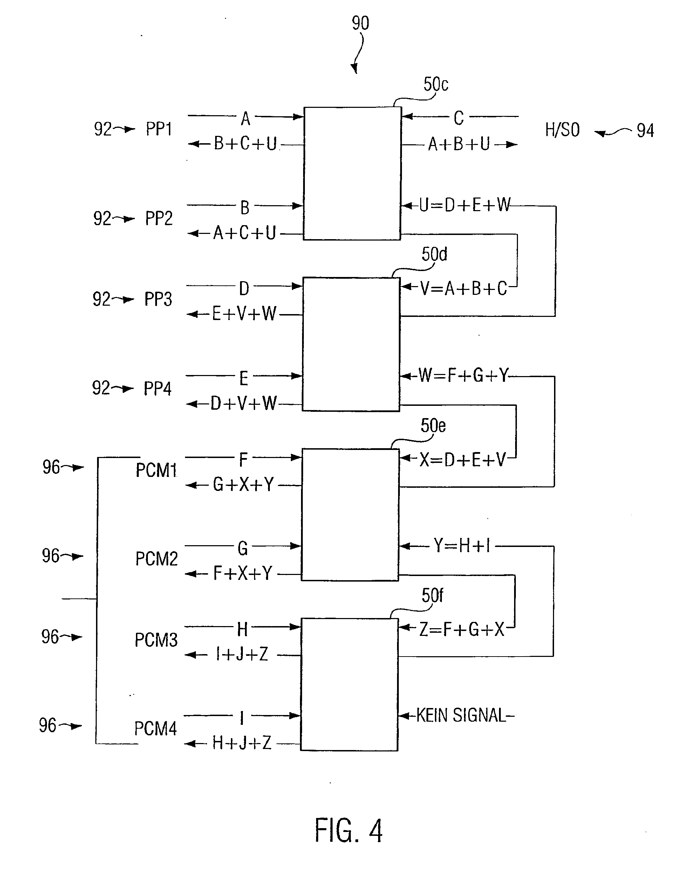

Fig. 4 zeigt ein Blockschaltbild eines Ausführungsbeispiels eines Konferenzblocks mit neun Teilnehmern, der in seiner Gesamtheit mit 90 bezeichnet ist. Dieser umfasst vier Basis-Konferenzblöcke 50c, 50d, 50e, 50f mit je vier Signaltoren und weist neun externe Signaltore 92,94,96 auf. Ein erster Basiskonferenzblock 50c stellt drei externe Signaltore 92,94 zur Verfügung und ist an einem Signaltor mit einem weiteren zweiten Basis-Konferenzblock 50d verbunden. Der zweite Basis-Konferenzblock 50d stellt zwei externe Signaltore 92 zur Verfügung und ist an je einem Signaltor mit dem ersten Basis-Konferenzblock 50c und einem dritten Basis-Konferenzblock 50e verbunden. Dieser stellt wiederum zwei externe Signaltore 96 zur Verfügung und ist an seinem vierten Signaltor mit einem vierten Basis-Konferenzblock 50f verbunden. Der vierte Basis-Konferenzblock 50f stellt wiederum zwei externe Signaltore 92 zur Verfügung. Ein Signaltor des vierten Basis-Konferenzblocks 50f ist unbeschaltet. Somit werden insgesamt neun externe Signaltore 92,94,96 zur Verfügung gestellt. An jedem Ausgang eines externen Signaltors liegt die Summe aller Eingänge mit Ausnahme des eigenen Signaltors an.

Die Beschreibung des Basis-Konferenzblocks 50 sowie der erweiterten Konferenzblöcke mit sechs Teilnehmern 70 bzw. neun Teilnehmern 90 zeigt, dass basierend auf einem kleinen Basis-Konferenzblock mit einer gegebenen Anzahl von Signaltoren durch geeignete Verschaltung größere Konferenzblöcke mit mehr Signaltoren zusammengesetzt werden können. Die wesentlichen Eigenschaften der Signalblöcke, insbesondere die Tatsache, dass ein Eingangssignal an die Ausgänge aller anderen Signaltore, aber nicht an den Ausgang des eigenen Signaltors übertragen wird, bleiben erhalten.

Basierend auf dem Verständnis der Basis-Konferenzblöcke 50 und der erweiterten Konferenzblöcke 70,90 mit sechs Teilnehmern bzw. neun Teilnehmern wird nun die Funktionsweise des Sprachkonferenzsystems 10 gemäß Fig. 1 erläutert. Bei dem vorliegenden Ausführungsbeispiel sind sowohl die Master-Basisstation 12 als auch die Slave-Basisstationen 14 gleichartig aufgebaute DECT-Basisstationen. Die Mobilteile 26 sind bei dem vorliegenden Ausführungsbeispiel DECT-Mobilstationen. Die Basisstationen können auch mobil betrieben werden. Bei dem vorliegenden Ausführungsbeispiel sind Basisstationen und Mobilstationen hardwaremäßig baugleich und als Funkmodul ausgeführt. Der Unterschied besteht lediglich in der aufgespielten Software (Firmware). Sowohl für Basisstationen als auch für Mobilstationen kann jedes DECT-Derivat in unterschiedlichen Frequenzbändern oder mit unterschiedlichen Frequenzbelegungsverfahren verwendet werden, z. B. auch DECT im 2.4 GHz Band mit Frequenzsprung-Verfahren. Die Audiosignale werden zwischen den Basisstationen 12, 14 und den Mobilteilen 26 dem DECT-Standard entsprechend ADPCM-codiert über die Luft übertragen. Eine entsprechende Wandlung in PCM-codierte Signale ist möglich und wird in den Mobilteilen und in der Basisstation durchgeführt.

Insgesamt erfolgt die Übertragung über die Luftstrecke weitgehend transparent, so dass davon ausgegangen werden kann, dass an den Eingängen der Signaltore 92,72 das von den jeweiligen Mobilteilen 26 aufgenommene Sprachsignal in digitalisierter Form anliegt, und dass das an den Ausgängen der Signaltore 92, 72 vorliegende digitalisierte Sprachsignal über die Lautsprecher der zugehörigen Mobilteile 26 ausgegeben wird. Eine bidirektionale Analog-Digital-Wandlerschaltung, die zwischen die Hör-/Sprechstellen 24 und die Konferenzblöcke 20, 22 geschaltet ist, stellt sicher, dass das Mikrophonsignal einer jeweiligen lokalen Sprechstelle an der DECT-Basisstation am Eingang des zugehörigen Signaltors 94,74 in digitaler Form vorliegt, und dass das digitalisierte Sprachsignal am Ausgang des Signaltors 94,74 an dem lokalen Lautsprecher ausgegeben wird.

Unterschieden wird hier eine lokale Konferenz, die nur die mit der jeweiligen Basisstation verbundenen Mobilteile 26 sowie die lokale Hör-/Sprechstelle 24 umfaßt, sowie eine globale Konferenz, bei der die lokalen Konferenzen der jeweiligen Basisstationen 12,14 zu einer Gesamtkonferenz vereinigt werden. Pro Basisstation können mehrere Mobilstationen in einer lokalen Konferenzschaltung betrieben werden. Bei einer lokalen Konferenz können also alle direkt mit einer Basisstation verbundenen Teilnehmer miteinander sprechen. Die Verbindung zwischen den Basisstationen wird hier zunächst nicht berücksichtigt. Die lokale Konferenz wird erzielt, indem die PCM-codierten Sprachsignale von den Mobilteilen 26 und der lokalen Hör-/Sprechstelle 24 in einem Konferenzblock 20,22 so addiert werden, dass an dem Ausgang eines Signaltors 92,94,72,74 die Summe der Eingangssignale aller anderen Signaltore 92,94,72,74 eines Konferenzblocks anliegt. Die praktische Umsetzung dieser Berechnungsvorschrift ist vergleichsweise problemlos möglich, indem die in PCM-codierter Form vorliegenden Sprachsignale in dem DECT-Prozessor der Basisstation 12,14 digital addiert werden. Die Bildung einer lokalen Konferenz bedeutet somit keinen zusätzlichen Schaltungsaufwand. Die maximale Anzahl der Mobilteile 26 pro Basisstation 12,14 wird hierbei von den Systemeigenschaften der Basisstation 12,14 beistimmt, z. B. von der maximalen Anzahl der gleichzeitigen Funkverbindungen und der maximalen Anzahl der gleichzeitig verwendbaren Sprachkanäle.

Ausgehend von der eben beschriebenen Vorgehensweise zur Bildung einer lokalen Konferenz kann eine globale Konferenz, bei der Teilnehmer an allen an alle Basisstationen 12,14 angeschlossenen Endgeräten 24,26 gleichzeitig miteinander sprechen können, eingerichtet werden. Hierbei werden die lokalen Konferenzen in vorteilhafter Weise zu größeren Verteilten Konferenzen kombiniert. Die Teilkonferenzsignale werden zwischen den Basisstationen digital (PCM-kodiert) ausgetauscht. Die Basisstationen 12,14 werden dazu über einen drahtgebundenen, seriellen Bus 30, auf dem mehrere logische Kanäle in Zeitmultiplex übertragen werden, verbunden. Eine der baugleichen Basisstationen übernimmt durch entsprechende Konfiguration die Rolle eines Masters (Master-Basisstation 12). Der Master hat die Aufgabe, die Teilkonferenzen der anderen Basisstationen (Slave-Basisstationen 14) zu kombinieren. Weiterhin übernimmt die Master-Basisstation 12 die Synchronisierung des seriellen Busses 30. Über den drahtgebundenen seriellen Bus 30 wird je eine logische bidirektionale Verbindung zwischen der Master-Basisstation 12 und jeder der Slave-Basisstationen 14 aufgebaut. Die Übertragung in beide Richtungen und zwischen dem Master 12 und der jeweiligen Slave-Basisstation 14 erfolgt mit Hilfe von logischen Kanälen im Zeitmultiplex. Die digitalisierten Sprachsignale werden über diese Verbindung PCM-codiert übertragen. Damit ist auch die Busverbindung zwischen der Master-Basisstation 12 und den Slave-Basisstationen 14 transparent, d. h. gleichwertig einer direkten bidirektionalen Punkt-zu-Punkt-Verbindung zwischen der Master-Basisstation 12 und jeder der Slave-Basisstationen 14. Sämtliche Aufgaben der Busverwaltung werden von einer Fernkoppleinrichtung 31 übernommen.

Die Master-Basisstation entspricht somit im wesentlichen einem Konferenzblock 20 mit neun Teilnehmern, der mit vier mobilen Hör-/Sprechstellen 26, einer lokalen Hör-/Sprechstelle 24 sowie vier weiteren Konferenzblöcken 22 verbunden ist. Eine Slave-Basisstation entspricht im wesentlichen einem Konferenzblock 22 mit sechs Teilnehmern, der mit vier mobilen Hör-/Sprechstellen 26, einer lokalen Hör-/Sprechstelle 24 und dem Basis-Konferenzblock 20 verbunden ist.

Somit ist die Funktionsweise des gesamten Sprachkonferenzsystems detailliert wie folgt zu verstehen: In jedem Mobilteil 26 wird ein drahtlos empfangenes Eingangssignal analog an dem Lautsprecher der jeweiligen Hör-/Sprechstelle ausgegeben. Das Mikrophonsignal der Hör-/Sprechstelle jedes Mobilteils 26 wird zu der entsprechenden Basisstation 12,14 digital übertragen. In den Slave-Basisstationen wird ein von einem lokalen Mobilteil 26 über die Luft empfangenes Eingangssignal analog auf die lokale Hör-/Sprechstelle 24 ausgegeben sowie zu den anderen lokalen Mobilteilen 26 und zu der Master-Basisstation 12 digital weitergeleitet. Das Mikrophonsignal an der lokalen Hör-/Sprechstelle 24 einer Slave-Basisstation 14 wird zu der Master-Basisstation 12 und zu den lokalen Mobilteilen 26 digital übertragen. In der Slave-Basisstation 14 wird ferner das von der Master-Basisstation 12 kommende Signal analog an der Hör-/Sprechstelle 24 ausgegeben sowie zu den lokalen Mobilteilen 26 digital übertragen.

In der Master-Basisstation 12 wird ein von einem lokalen Mobilteil 26 über die Luft empfangenes Eingangssignal analog auf die lokale Hör-/Sprechstelle 24 ausgegeben sowie zu den anderen lokalen Mobilteilen 26 und zu allen Slave-Basisstationen 14 digital weitergeleitet. Das Mikrophonsignal an der lokalen Hör-/Sprechstelle 24 der Master-Basisstation wird zu allen Slave-Basisstationen 14 und zu den lokalen Mobilteilen 26 digital übertragen. In der Master-Basisstation 12 wird ferner das von einer Slave-Basisstation 14 kommende Signal analog an der Hör-/Sprechstelle 24 ausgegeben sowie zu den anderen Slave-Basisstationen 14 und den lokalen Mobilteilen 26 digital übertragen.

Es wird somit in der Master-Basisstation 12 die lokale Konferenz der Master-Basisstation mit den lokalen Konferenzen der Slave-Basisstationen 14 kombiniert. Somit ist ein wesentlicher Teil des Rechenaufwands in die Slave-Basisstationen 14 ausgelagert, in denen jeweils schon eine lokale Teilkonferenz berechnet wird. Insbesondere müssen auch nicht alle Endgeräte 24,26 eine (direkte oder logische) Verbindung zu einer zentralen Basisstation aufweisen. Die Übertragung von geeigneten Summensignalen, wie oben beschrieben, ist ausreichend. Dies verringert wesentlich die Anforderungen an die Verbindung zwischen den Endgeräten und der Zentralstation.

Es ist offensichtlich, dass das gezeigte Ausführungsbeispiel nicht die einzige Realisierung der vorliegenden Erfindung ist. Vielmehr kann das hier beschriebene Sprachkonferenzsystem in einem weiten Rahmen verändert werden. Beispielsweise kann die Zahl der Mobilteile und der lokalen Hör-/Sprechstellen verändert werden. Bei dem beschriebenen Ausführungsbeispiel werden eine Master-Basisstation und vier Slave-Basisstationen eingesetzt. Jede der Basisstationen ist mit jeweils vier Mobilteilen über eine Funkstrecke verbunden und synchronisiert. Die Mobilstionen können daher zu der zugehörigen Basisstation eine Funkverbindung mit Audiosignalübertragung auf- und abbauen. Weiterhin weist die Basisstation eine lokale Hör-/Sprechstelle auf. Das vorbeschriebene Sprachkonferenzsystem ist somit geeignet, eine Sprachkonferenz aus bis zu 25 Teilnehmern aufzubauen.

Je nach Anforderungen und technischen Möglichkeiten kann die Anzahl der Mobilstationen pro Basisstation verändert werden. Weiterhin kann die lokale Sprechstelle an der Basisstation entfallen oder es kann mehr als eine lokale Sprechstelle verwendet werden. Die Zahl der Slave-Basisstationen kann erhöht werden, wenn gleichzeitig die Anzahl der logischen Kanäle auf dem seriellen Bus, der die Slave-Basisstationen an die Master-Basisstation anbindet, erhöht wird. Es ist unschwer erkennbar, dass die Skalierbarkeit auf lokaler und globaler Ebene einen großen Vorteil des erfindungsgemäßen Sprachkonferenzsystems ausmacht.

Bei einem weiteren Ausführungsbeispiel der vorliegenden Erfindung kann die Verbindung zwischen der Master-Basisstation und den Slave-Basisstationen auf andere Art und Weise realisiert werden. Der drahtgebundene serielle Bus kann durch jede andere Verbindung ersetzt werden, solange sichergestellt ist, dass eine Sprachübertragung mit hinreichender Qualität und geringer zeitlicher Verzögerung möglich ist. Insbesondere kann jedes beliebige Hochgeschwindigkeits-Bussystem verwendet werden. Weiterhin ist auch denkbar, mehrere Basisstationen über ein (vorzugsweise digitales) öffentliches Fernsprechnetz anzubinden. Der Vorteil einer solchen Lösung liegt darin, dass das Sprachkonferenzsystem räumlich stark ausgedehnt werden kann. Ferner kann die Verbindung zwischen der Master-Basisstation und den Slave-Basisstationen auch drahtlos erfolgen. Dies bringt den Vorteil, dass der Installationsaufwand sich wesentlich verringert. Prinzipiell ist es auch denkbar, ein Sprachkonferenzsystem gemäß der vorliegenden Erfindung als Ad-Hoc-System auszuführen. Das heißt, die Konfiguration des Systems und insbesondere die Konfiguration eines drahtlosen Geräts als Endgerät, als Master-Basisstation oder als Slave-Basisstation erfolgt automatisch. Dies ist möglich, da hardwaremäßig kein Unterschied zwischen Endgerät, Master-Basisstation und Slave-Basisstation besteht. Entsprechend ist die Hardware sehr universell einsetzbar und es kann jede beliebige Konfiguration des Sprachkonferenzsystems einfach erzielt werden.

Bei einem weiteren Ausführungsbeispiel können die DECT-Basisstationen und DECT-Mobilstationen durch Basisstationen und Mobilstationen ersetzt werden, die einem anderen Standard gehorchen. Auch bei der Signalübertragung zu den Mobilteilen kann die ADPCM-Codierung durch jede beliebige Signalcodierung ersetzt werden. Das Sprachkonferenzsystem gemäß der vorliegenden Erfindung ist also nicht an einen bestimmten Kommunikationsstandard gebunden.

Weiterhin ist es möglich, die Verbindung zwischen mehreren Basisstationen nicht nur zur Übertragung von digitalisierten Sprachsignalen, sondern auch zur Übertragung von Synchronisationsinformationen zu verwenden. Insbesondere können die Sendefrequenzen und die Sendezyklen der mit den verschiedenen Basisstationen in Kontakt stehenden Mobilteile synchronisiert werden. Damit ist eine effizientere Nutzung der Frequenzressourcen möglich.

So können beispielsweise eine erste Zeitmultiplex-Übertragung zwischen einem ersten Basis-Konferenzblock und den mit dem ersten Basis-Konferenzblock in Kontakt stehenden Mobilteilen und eine zweite Zeitmultiplex-Übertragung zwischen einem zweiten Basis-Konferenzblock und den mit dem zweiten Basis-Konferenzblock in Kontakt stehenden Mobilteilen zeitlich und/oder frequenzmäßig koordiniert werden. Damit kann erreicht werden, dass bei der ersten Zeitmultiplex-Übertragung nur Zeitschlitze verwendet werden, die bei der zweiten Zeitmultiplex-Übertragung nicht verwendet werden und umgekehrt. Über die Verbindung zwischen den Basisstationen kann zu diesem Zweck zwischen den Basisstationen eine Information über eine Rahmenstruktur der Zeitmultiplex-Übertragung zwischen den Basisstationen und den Mobilteilen übertragen werden, so dass die beteiligten Basisstationen beispielsweise die gleiche Rahmenstruktur für die Kommunikation mit den Mobilteilen benutzen können. Somit können Sendezyklen der Basisstationen und/oder der Mobilteile, die mit verschiedenen Basisstationen in Kontakt stehen, koordiniert werden.

Die Rahmenstruktur der Zeitmultiplex-Übertragung beschreibt hierbei beispielsweise Zeitschlitze, die den einzelnen Basisstationen und/oder Mobilteilen zugewiesen sind bzw. Einzelheiten der Zuordnung von Zeitschlitzen zu Basisstationen und/oder Mobilteilen. Die Rahmenstruktur kann beispielsweise vorsehen, dass bei insgesamt N Mobilteilen der n-te (1<=n<=N) Zeitschlitz eines Rahmens der Kommunikation zwischen dem n-ten Mobilteil und der zugehörigen Basisstation zugewiesen ist (wobei wiederum ein erster Teil des n-ten Zeitschlitzes einer Übertragung von der Basisstation zu dem Mobilteil und ein zweiter Teil des n-ten Zeitschlitzes einer Übertragung von dem Mobilteil zu der zugehörigen Basisstation zugewiesen sein kann). Ein Rahmen kann ferner auch noch weitere Synchronisationsinformationen umfassen.

Die Rahmenstruktur kann also durch die Verbindung zwischen den Basisstationen allen Teilnehmern (Basisstationen und vorzugsweise auch Mobilstationen) bekannt gemacht werden. Im übrigen kann die Rahmenstruktur der Zeitmultiplex-Übertragung auch dynamisch an die Anzahl der vorhandenen Mobilstationen angepasst werden. Auch eine von den einzelnen Mobilstationen benötigte (Daten-) Übertragungsrate kann bei der Festlegung der Rahmenstruktur berücksichtigt werden.

Die beschriebene Koordination der Rahmenstruktur erleichtert beispielsweise die Verwaltung bei der Bewegung einer bestimmten Mobilstation. Bewegt sich nämlich die bestimmte Mobilstation von dem Versorgungsbereich einer ersten Basisstation in einen Versorgungsbereich einer zweiten Basisstation, so ist es bei Verwendung der erfindungsgemäßen Basisstationen mit einer Fernkoppeleinrichtung zur Übertragung von Synchronisationsinformationen möglich, einen Zeitschlitz der Zeitmultiplex-Rahmenstruktur, in dem die erste Basisstation mit der bestimmten Mobilstation kommuniziert hat, an die zweite Basisstation für eine Kommunikation mit der bestimmten Mobilstation zu übertragen. Die Übertragung der entsprechenden Synchronisationsinformationen kann über die Fernkoppeleinrichtung erfolgen. Damit ist ein "Roaming", also eine Übergabe eines Mobilteil von einer Basisstation zu einer anderen Basisstation möglich, ohne Synchronisationsinformationen mit dem Mobilteil auszutauschen. Die Synchronisation erfolgt vielmehr zwischen den Basisstationen unter Verwendung der Fernkoppeleinrichtung.

Allerdings ist es ebenso möglich, eine feste Rahmenstruktur zu verwenden, die von einer zentralen Basisstation an alle anderen Basisstationen über die Fernkoppeleinrichtung verteilt wird, und die gegebenenfalls auch an die Mobilteile übertragen wird.

Im übrigen sei darauf hingewiesen, dass über die Fernkoppeleinrichtung nicht nur Informationen über die Rahmenstruktur zwischen den Basisstationen ausgetauscht werden können, sondern dass auch eine zeitliche Synchronisation der Basisstationen erfolgen kann, so dass alle Basisstationen gleichzeitig einen Anfang eines Rahmens erkennen.

Auch die Implementierung eines Basis-Konferenzblocks kann stark verändert werden. Die Realisierung ist sowohl durch einen Prozessor in Verbindung mit einem geeigneten Programm als auch hardwaremäßig, beispielsweise in Form eines programmierbaren Logikbausteins oder einer anwendungsspezifischen integrierten Schaltung möglich. Weiterhin kann der Basis-Konferenzblock entweder als Ganzes realisiert werden oder, wie gezeigt, in Unterblöcke aufgeteilt werden. Welche Form günstiger ist, hängt im wesentlichen von der vorliegenden Realisierungsform und von der Anzahl der benötigten Signaltore ab.

Bei einem weiteren Ausführungsbeispiel kann der hierarchische Aufbau, bei dem zwischen Master-Basisstation und Slave-Basisstation unterschieden wird, aufgehoben werden. Für die Funktionsfähigkeit eines Sprachkonferenzsystems gemäß der vorliegenden Erfindung ist es ausreichend, dass ein digitalisiertes Sprachsignal von jedem beliebigen Konferenzblock zu jedem beliebigen anderen Konferenzblock übertragen werden kann. Sind die Latenzzeiten bei der Übertragung gering, so spielt die Anzahl der zwischengeschalteten Konferenzblöcke keine Rolle. Insbesondere ist es ausreichend, wenn eine Punkt-zu-Punkt-Verbindung zwischen je zwei benachbarten Konferenzblöcken besteht. Eine solche Systemkonfiguration entspricht der in Fig. 4 gezeigten, wobei die Basis-Konferenzblöcke durchaus räumlich getrennt sein können.

Ebenso können bei einem weiteren Ausführungsbeispiel mehrere lokale Teilkonferenzen gebildet werden. Die Berechnung kann sowohl dezentral als auch in einer Master-Basisstation erfolgen. Insbesondere kann auch zur Laufzeit des Systems bestimmt werden, welche Station als Master-Basisstation agieren soll.

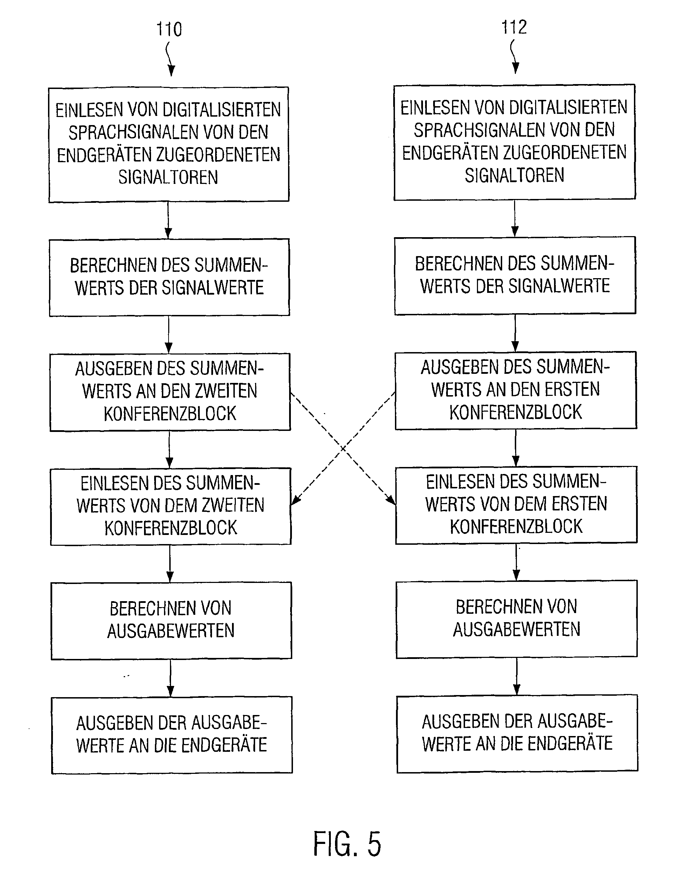

Fig. 5 zeigt ein Ablaufdiagramm eines Ausführungsbeispiels eines erfindungsgemäßen Verfahrens zum Betrieb eines Sprachkonferenzsystems mit zwei Basis-Konferenzblöcken. Das Verfahren wird parallel in zwei Basis-Konferenzblöcken ausgeführt, wobei die Verfahrensschritte im ersten Konferenzblock mit 110 und die Verfahrensschritte im zweiten Konferenzblock mit 112 bezeichnet sind. In einem ersten Schritt werden in beiden Basis-Konferenzblöcken digitalisierte Sprachsignale von den Eingängen von zwei oder mehr Signaltoren eingelesen, die mit Endgeräten gekoppelt sind. In einem zweiten Schritt werden die von den Endgeräten eingelesenen Signalwerte in beiden Konferenzblöcken addiert. Der Summenwert wir sodann an einem Signaltor ausgegeben, das mit dem jeweils anderen Konferenzblock verbunden ist. Entsprechend wird daraufhin der von dem jeweils anderen Konferenzblock ausgegebene Summenwert eingelesen. Schließlich werden in jedem Konferenzblock Ausgabewerte für die mit Endgeräten verbundenen Signaltore durch Summenbildung der von den jeweils anderen mit Endgeräten verbundenen Signaltoren eingelesenen Signalwerte und der von dem anderen Basis-Konferenzblock übertragenen Summenwerte gebildet. Diese werden in einem letzten Schritt an die Endgeräte ausgegeben.

Das erfindungsgemäße Verfahren stellt somit eine klare zeitliche Reihenfolge bei der Summenbildung und dem Austausch von Summenwerten zwischen mehreren Konferenzblöcken her. Die lokal gebildeten Summenwerte müssen erst zwischen den beteiligten Basis-Konferenzblöcken ausgetauscht werden, bevor der endgültige Ausgabewert für die Endgeräte berechnet werden kann. Ein solches Verfahren ist insbesondere dann notwendig, wenn die Übertragungszeit zwischen einzelnen Konferenzblöcken durch große Laufzeit auf der Übertragungsstrecke lang ist. Das vorbeschriebene Verfahren ermöglicht es somit, daß die Signale aller Teilnehmer gleichzeitig an einem Endgerät ausgegeben werden, unabhängig davon, ob sie mit dem gleichen Konferenzblock wie das Endgerät oder einem räumlich entfernten Konferenzblock verbunden sind.

Die vorliegende Erfindung schafft also ein Sprachkonferenzsystem, das eine Sprachkonferenz mit sehr hoher Sprachqualität ermöglicht. Die Audiosignale werden sofort an den Mikrophonen in digitale Signale umgesetzt, die gegen Störeinkopplungen wesentlich resistenter sind als analoge Signale. Durch die dezentrale Bildung von Teilkonferenzen wird keine aufwendige Zentraleinheit benötigt. Die Basisstationen und die Mobilteile können vom Aufbau her identisch sein und unterscheiden sich nur in der jeweiligen Betriebssoftware. Insbesondere kann ein Sprachkonferenzsystem unter Verwendung der erfindungsgemäßen Basis-Konferenzblöcke sehr flexibel konfiguriert und an eine große Anzahl von digitalen Kommunikationsstandards angepasst werden.

## Patentansprüche

1. Sprachkonferenzvorrichtung mit den folgenden Merkmalen:
mindestens einem Basis-Konferenzblock (20,22,50), der drei oder mehr Signaltore (52) aufweist, die jeweils einen Eingang (54) für ein digitalisiertes Sprachsignal und einen Ausgang (56) für ein digitalisiertes Sprachsignal umfassen,
wobei ein Basis-Konferenzblock (20,22,50) so ausgelegt ist, dass an einem Signaltor (52) unter Zuhilfenahme einer Koppeleinrichtung (27,29,31) wahlweise ein Endgerät (24,26) oder ein weiterer Basis-Konferenzblock (20,22,50) zur Realisierung einer bezüglich der Teilnehmerzahl oder räumlich erweiterten Sprachkonferenzvorrichtung (10) angekoppelt werden kann und
wobei ein Basis-Konferenzblock (20,22,50) ausgelegt ist, um eine Sprachkonferenz zwischen den an denselben angekoppelten Endgeräten (26) oder Basis-Konferenzblöcken (20,22,50) zu ermöglichen; und
einer Fernkoppeleinrichtung (31), die ausgelegt ist, um einen Basis-Konferenzblock (20,22,50) mit mindestens einem weiteren räumlich entfernten Basis-Konferenzblock (20,22,50) zu koppeln, um eine räumlich ausgedehnte Sprachkonferenz zu ermöglichen,
wobei die Fernkoppeleinrichtung (31) ferner für eine Übertragung von Synchronisationsinformationen ausgelegt ist, um Sendezyklen von mit verschiedenen Sprachkonferenzvorrichtungen (12, 14) in Kontakt stehenden Mobilteilen (PP1, PP2, PP3, PP4, PP5, PP6, PP7, PP8, PP17, PP18, PP19, PP20) zu synchronisieren.

2. Sprachkonferenzvorrichtung gemäß Anspruch 1, bei dem die Fernkoppeleinrichtung (31) ausgelegt ist, um einen Basis-Konferenzblock (20,22,50) mit mindestens zwei weiteren räumlich entfernten Basis-Konferenzblöcken (20,22,50), an die Endgeräte (26) angekoppelt sind, zu koppeln, um eine Sprachkonferenz zwischen den an insgesamt mindestens drei räumlich verteilten Basis-Konferenzblöcken (20,22,50) angekoppelten Endgeräten (26) zu ermöglichen.

3. Sprachkonferenzvorrichtung gemäß Anspruch 1 oder 2, bei der ein Basis-Konferenzblock (20,22,50) so ausgelegt ist, dass an jedem Ausgang (56) eines Signaltors (52) ein auf digitalem Wege gebildetes Summensignal der Eingangssignale an den Eingängen (54) der jeweils anderen Signaltore (52) in digitaler Form anliegt.

4. Sprachkonferenzvorrichtung gemäß einem der Ansprüche 1 bis 3, bei der eine der Koppeleinrichtungen eine Funkkoppeleinrichtung (29) umfasst, die so ausgelegt ist, dass ein Endgerät (26) über eine drahtlose Verbindung an einen Basis-Konferenzblock (20,22,50) angekoppelt werden kann.

5. Sprachkonferenzvorrichtung gemäß Anspruch 4, bei der die Funkkoppeleinrichtung (29) so ausgelegt ist, dass sie eine drahtlose Verbindung zwischen der Sprachkonferenzvorrichtung und einem Endgerät (26) gemäß dem DECT-Standard oder einem daran angelehnten Standard ermöglicht.

6. Sprachkonferenzvorrichtung gemäß einem der Ansprüche 1 bis 5, bei der eine Hör- und Sprechstelle (24) über eine Einrichtung (27) zur Umwandlung von analogen Signalen in digitale Signale und eine Einrichtung zur Umwandlung von digitalen Signalen in analoge Signale an den Basis-Konferenzblock (20,22,50) angekoppelt ist.

7. Sprachkonferenzvorrichtung gemäß einem der Ansprüche 1 bis 6, bei der die Fernkoppeleinrichtung (31) so ausgelegt ist, dass mindestens ein weiterer Basis-Konferenzblock (22,50) über eine drahtlose Verbindung an einen ersten Basis-Konferenzblock (20,50) angekoppelt werden kann.

8. Sprachkonferenzvorrichtung gemäß einem der Ansprüche 1 bis 7, bei der die Fernkoppeleinrichtung (31) so ausgelegt ist, dass mindestens ein weiterer Basis-Konfernezblock (22,50) über einen drahtgebundenen Bus (30) an einen ersten Basis-Konferenzblock (20,50) angekoppelt werden kann.

9. Sprachkonferenzvorrichtung gemäß Anspruch 8, wobei der drahtgebundene Bus (30) für eine Übertragung mehrerer Sprachkanäle im Zeitmultiplex ausgelegt ist.

10. Sprachkonferenzvorrichtung gemäß einem der Ansprüche 1 bis 9, bei der der Basis-Konferenzblock (20,22,50) durch einen Prozessor in Verbindung mit einer geeigneten Betriebssoftware realisiert wird.

11. Sprachkonferenzvorrichtung gemäß Anspruch 10, wobei der Prozessor gleichzeitig für wenigstens eine der folgenden Aufgaben verwendet wird:
Bereitstellung einer Benutzeroberfläche,
Codierung von Daten,
Realisierung eines Übertragungsprotokolls.

12. Sprachkonferenzvorrichtung gemäß einem der Ansprüche 1 bis 11, bei der ein Basis-Konferenzblock (20,22,70,90) mit einer vorbestimmten Anzahl von Signaltoren (72,92) dadurch gebildet wird, dass mehrere Unter-Konferenzblöcke (50), die jeweils weniger als die vorbestimmte Anzahl an Signaltoren (52) aufweisen, gekoppelt sind,
wobei ein Unter-Konferenzblock (50) so ausgelegt ist, dass an einem Signaltor (52) unter Zuhilfenahme einer Koppeleinrichtung (27,29,31) wahlweise ein Endgerät (24,26), ein weiterer Unter-Konferenzblock (50) oder ein Basis-Konferenzblock (20,22,70,90) angekoppelt werden kann.

13. Sprachkonferenzsystem mit den folgenden Merkmalen:
mindestens zwei räumlich getrennten Basis-Konferenzblöcken (20,22), die drei oder mehr Signaltore (72,92) aufweisen, die jeweils einen Eingang für ein digitalisiertes Sprachsignal und einen Ausgang für ein digitalisiertes Sprachsignal umfassen,
wobei ein Basis-Konferenzblock (20,22) so ausgelegt ist, daß an einem Signaltor (72,92) unter Zuhilfenahme einer Koppeleinrichtung (27,29,31) wahlweise ein Endgerät (24,26) oder ein weiterer Basis-Konferenzblock (20,22) zur Realisierung einer bezüglich der Teilnehmerzahl oder räumlich erweiterten Sprachkonferenzvorrichtung angekoppelt werden kann; und
einer Fernkoppeleinrichtung (30, 31), über die die Basis-Konferenzblöcke miteinander gekoppelt sind,
wobei die Fernkoppeleinrichtung (31) ferner für eine Übertragung von Synchronisationsinformationen ausgelegt ist, um Sendezyklen von mit verschiedenen Basis-Konferenzblöcken (12, 14) in Kontakt stehenden Mobilteilen (PP1, PP2, PP3, PP4, PP5, PP6, PP7, PP8, PP17, PP18, PP19, PP20) zu synchronisieren.

14. Sprachkonferenzsystem gemäß Anspruch 13, das mindestens drei Basis-Konferenzblöcke (20,22) umfasst, die räumlich getrennt sind.

15. Sprachkonferenzsystem gemäß Anspruch 13 oder 14, bei dem mindestens zwei der Basis-Konferenzblöcke (20,22) über eine drahtlose Verbindung gekoppelt sind.

16. Sprachkonferenzsystem gemäß einem der Ansprüche 13 bis 15, bei dem mindestens zwei der Basis-Konferenzblöcke (20,22) über einen drahtgebundenen Bus (30) gekoppelt sind.

17. Sprachkonferenzsystem gemäß Anspruch 16, wobei der drahtgebundene Bus (30) für die Übertragung mehrerer Sprachkanäle im Zeitmultiplex ausgelegt ist.

18. Sprachkonferenzsystem gemäß einem der Ansprüche 13 bis 17, wobei das Sprachkonferenzsystem mindestens zwei Endgeräte (24,26) hat, wobei zwischen allen Endgeräten eine Duplex-Sprachverbindung besteht.

19. Sprachkonferenzsystem gemäß einem der Ansprüche 13 bis 18, bei der eines oder mehrere der Endgeräte (26) über eine drahtlose Verbindung an einen Basis-Konferenzblock angekoppelt sind.

20. Sprachkonferenzsystem gemäß Anspruch 19, bei dem die drahtlose Verbindung zu einem oder mehreren Endgeräten (26) gemäß dem DECT-Standard oder einem daran angelehnten Standard erfolgt.

21. Sprachkonferenzsystem gemäß einem der Ansprüche 13 bis 20, bei dem einer oder mehrere der Basis-Konferenzblöcke (20,22) Teil einer DECT-Basisstation (12,14) sind.

22. Sprachkonferenzsystem gemäß einem der Ansprüche 13 bis 21, bei dem eines oder mehrere der Endgeräte DECT-Mobilstationen (26) sind.

23. Sprachkonferenzsystem gemäß Anspruch 21 und 22, bei dem die DECT-Basisstationen (12,14) und die DECT-Mobilstationen (26) hardwaremäßig übereinstimmen.

24. Sprachkonferenzsystem, gemäß einem der Ansprüche 13 bis 23, bei dem eine Hör- und Sprechstelle (24) über eine Einrichtung (27) zur Umwandlung von analogen Signalen in digitale Signale und eine Einrichtung (27) zur Umwandlung von digitalen Signalen in analoge Signale an einen Basis-Konferenzblock (20,22,50) angekoppelt ist.

25. Sprachkonferenzsystem gemäß einem der Ansprüche 13 bis 24, bei dem ein Basis-Konferenzblock (20,22,50) so ausgelegt ist, dass an jedem Ausgang (56) eines Signaltors (52) ein auf digitalem Wege gebildetes Summensignal der Eingangssignale der jeweils anderen Signaltore (52) in digitaler Form anliegt.

26. Sprachkonferenzsystem gemäß einem der Ansprüche 13 bis 25, bei dem ein Basis-Konferenzblock (20,22,50) durch einen Prozessor in Verbindung mit einer geeigneten Betriebssoftware realisiert wird.

27. Sprachkonferenzsystem gemäß Anspruch 26, wobei der Prozessor gleichzeitig für wenigstens eine der folgenden Aufgaben verwendet wird:
Bereitstellung einer Benutzeroberfläche,
Codierung von Daten,
Realisierung eines Übertragungsprotokolls.

28. Sprachkonferenzsystem gemäß einem der Ansprüche 13 bis 27, bei der ein Basis-Konferenzblock (20,22,70,90) mit einer vorbestimmten Anzahl von Signaltoren (72,92) dadurch gebildet wird, daß mehrere Unter-Konferenzblöcke (50), die jeweils weniger als die vorbestimmte Anzahl an Signaltoren (52) aufweisen, gekoppelt sind,
wobei ein Unter-Konferenzblock (50) so ausgelegt ist, dass an jedem Signaltor (52) unter Zuhilfenahme einer Koppeleinrichtung wahlweise ein Endgerät (24,26), ein weiterer Unter-Konferenzblock (50) oder ein Basis-Konferenzblock (20,22,70,90) angekoppelt werden kann.

29. Verfahren zum Betreiben eines verteilten Sprachkonferenzsystems mit zwei über je ein Signaltor miteinander gekoppelten Basis-Konferenzblöcken (20,22) gemäß einem der Ansprüche 13 bis 28, mit folgenden Schritten:
Einlesen der digitalisierten Sprachsignale von den Eingängen der zwei oder mehr Signaltore eines ersten Basis-Konferenzblocks (20), die mit den Endgeräten (24,26) gekoppelt sind;
Einlesen der digitalisierten Sprachsignale von den Eingängen der zwei oder mehr Signaltore eines zweiten Basis-Konferenzblocks (22), die mit den Endgeräten (24,26) gekoppelt sind;
Berechnen eines ersten Summenwerts aus den eingelesenen digitalisierten Sprachsignalen des ersten Basis-Konferenzblocks (20);
Berechnen eines zweiten Summenwerts aus den eingelesenen digitalisierten Sprachsignalen des zweiten Basis-Konferenzblocks (22);
Ausgeben des ersten Summenwerts an dem Ausgang des Signaltors des ersten Basis-Konferenzblocks (20), das mit einem Signaltor des zweiten Basis-Konferenzblocks (22) gekoppelt ist;
Ausgeben des zweiten Summenwerts an dem Ausgang des Signaltors des zweiten Basis-Konferenzblocks (22), der mit einem Signaltor des ersten Basis-Konferenzblocks (20) gekoppelt ist;
Einlesen des zweiten Summenwerts von dem Eingang des Signaltors des ersten Basis-Konferenzblocks (20), das mit einem Signaltor des zweiten Basis-Konferenzblocks (22) gekoppelt ist;
Einlesen des ersten Summenwerts von dem Eingang des Signaltors des zweiten Basis-Konferenzblocks (22), das mit einem Signaltor des ersten Basis-Konferenzblocks (20) gekoppelt ist;
Berechnen von Ausgabewerten an den Ausgängen der mit einem Endgerät (24,26) verbundenen Signaltore des ersten Basis-Konferenzblocks (20) durch Bilden der Summe der von den Eingängen der jeweils anderen Signaltore des ersten Basis-Konferenzblocks (20) eingelesenen Werte einschließlich des von dem zweiten Basis-Konferenzblock (22) übertragenen zweiten Summenwerts;
Berechnen von Ausgabewerten an den Ausgängen der mit einem Endgerät (24,26) verbundenen Signaltore des zweiten Basis-Konferenzblocks (22) durch Bilden der Summe der von den Eingängen der jeweils anderen Signaltore des zweiten Basis-Konferenzblocks (22) eingelesenen Werte einschließlich des von dem ersten Basis-Konferenzblock (20) übertragenen ersten Summenwerts; und
Ausgeben der Ausgabewerte an den Ausgängen der Signaltore der zwei Basis-Konferenzblöcke (20,22), die mit Endgeräten (24,26) gekoppelt sind.

## Claims

1. A voice conference apparatus comprising:
at least one base conference block (20, 22, 50) comprising three or more signal ports (52), each including an input (54) for a digitalized voice signal and an output (56) for a digitalized voice signal,
wherein a base conference block (20, 22, 50) is formed such that, at a signal port (52), optionally a terminal (24, 26) or another base conference block (20, 22, 50) may be coupled using coupling means (27, 29, 31) for realizing a voice conference apparatus (10) extended with respect to the number of participants or in terms of space, and
wherein a base conference block (20, 22, 50) is formed to enable a voice conference among the terminals (26) or base conference blocks (20, 22, 50) coupled thereto; and
remote coupling means (31) formed to couple a base conference block (20, 22, 50) with at least one other spatially remote base conference block (20, 22, 50) in order to enable a spatially extended voice conference,
wherein the remote coupling means (31) is further formed for a transmission of synchronization information in order to synchronize transmitting cycles of mobile units (PP1, PP2, PP3, PP4, PP5, PP6, PP7, PP8, PP17, PP18, PP19, PP20) in contact with various voice conference apparatuses (12, 14).

2. The voice conference apparatus according to claim 1, wherein the remote coupling means (31) is formed to couple a base conference block (20, 22, 50) with at least two other spatially remote base conference blocks (20, 22, 50) to which terminals (26) are coupled in order to enable a voice conference among the terminals (26) coupled to a total of at least three spatially distributed base conference blocks (20, 22, 50).

3. The voice conference apparatus according to claim 1 or 2, wherein a base conference block (20, 22, 50) is formed such that, at each output (56) of a signal port (52), a digitally created sum signal of the input signals at the inputs (54) of the respective other signal ports (52) is present in digital form.

4. The voice conference apparatus according to one of claims 1 to 3, wherein one of the coupling means includes a radio coupling means (29) formed such that a terminal (26) can be coupled to a base conference block (20, 22, 50) via a wireless connection.

5. The voice conference apparatus according to claim 4, wherein the radio coupling means (29) is formed such that it enables a wireless connection between the voice conference apparatus and a terminal (26) according to the DECT standard or a standard based thereon.

6. The voice conference apparatus according to one of claims 1 to 5, wherein a talk-listen unit (24) is coupled to the base conference block (20, 22, 50) via means (27) for the conversion of analog signals to digital signals and means for the conversion of digital signals to analog signals.

7. The voice conference apparatus according to one of claims 1 to 6, wherein the remote coupling means (31) is formed such that at least one other base conference block (22, 50) may be coupled to a first base conference block (20, 50) via a wireless connection.

8. The voice conference apparatus according to one of claims 1 to 7, wherein the remote coupling means (31) is formed such that at least one other base conference block (22, 50) may be coupled to a first base conference block (20, 50) via a wire bus (30).

9. The voice conference apparatus according to claim 8, wherein the wire bus (30) is formed for a transmission of several voice channels in time-division multiplex.

10. The voice conference apparatus according to one of claims 1 to 9, wherein the base conference block (20, 22, 50) is realized by a processor in connection with suitable operational software.

11. The voice conference apparatus according to claim 10, wherein the processor is simultaneously used for at least one of the following tasks:
provision of a user interface,
coding of data,
realization of a transmission protocol.

12. The voice conference apparatus according one of claims 1 to 11, wherein a base conference block (20, 22, 70, 90) with a predetermined number of signal ports (72, 92) is formed by coupling several sub-conference blocks (50), each comprising less than the predetermined number of signal ports (52),
wherein a sub-conference block (50) is formed such that, at a signal port (52), optionally a terminal (24, 26), another sub-conference block (50), or a base conference block (20, 22, 70, 90) may be coupled using coupling means (27, 29, 31).

13. A voice conference system comprising:
at least two spatially separate base conference blocks (20, 22) comprising three or more signal ports (72, 92), each including an input for a digitalized voice signal and an output for a digitalized voice signal,
wherein a base conference block (20, 22) is formed such that, at a signal port (72, 92), optionally a terminal (24, 26) or another base conference block (20, 22) may be coupled using coupling means (27, 29, 31) for the realization of a voice conference apparatus extended with respect to the number of participants or in terms of space; and
remote coupling means (30, 31) via which the base conference blocks are coupled to one another,
wherein the remote coupling means (31) is further formed for a transmission of synchronization information in order to synchronize transmitting cycles of mobile units (PP1, PP2, PP3, PP4, PP5, PP6, PP7, PP8, PP17, PP18, PP19, PP20) in contact with various base conference blocks (12, 14).

14. The voice conference system according to claim 13, including at least three base conference blocks (20, 22) that are separated in terms of space.

15. The voice conference system according to claim 13 or 14, wherein at least two of the base conference blocks (20, 22) are coupled via a wireless connection.

16. The voice conference system according to one of claims 13 to 15, wherein at least two of the base conference blocks (20, 22) are coupled via a wire bus (30).

17. The voice conference system according to claim 16, wherein the wire bus (30) is formed for the transmission of several voice channels in time-division multiplex.

18. The voice conference system according to one of claims 13 to 17, wherein the voice conference system has at least two terminals (24, 26), wherein a duplex voice link exists among all terminals.

19. The voice conference system according to one of claims 13 to 18, wherein one or more of the terminals (26) are coupled to a base conference block via a wireless connection.

20. The voice conference system according to claim 19, wherein the wireless connection to one or more terminals (26) is effected according to the DECT standard or a standard based thereon.

21. The voice conference system according to one of claims 13 to 20, wherein one or more of the base conference blocks (20, 22) are part of a DECT base station (12, 14).

22. The voice conference system according to one of claims 13 to 21, wherein one or more of the terminals are DECT mobile units (26).

23. The voice conference system according to claims 21 and 22, wherein the DECT base stations (12, 14) and the DECT mobile units (26) match in hardware.

24. The voice conference system according to one of claims 13 to 23, wherein a talk-listen unit (24) is coupled to a base conference block (20, 22, 50) via means (27) for the conversion of analog signals to digital signals and means (27) for the conversion of digital signals to analog signals.

25. The voice conference system according to one of claims 13 to 24, wherein a base conference block (20, 22, 50) is formed such that, at each output (56) of a signal port (52), a digitally created sum signal of the input signals of the respective other signal ports (52) is present in digital form.

26. The voice conference system according to one of claims 13 to 25, wherein a base conference block (20, 22, 50) is realized by a processor in connection with suitable operational software.

27. The voice conference system according to claim 26, wherein the processor is used simultaneously for at least one of the following tasks:
provision of a user interface,
coding of data,
realization of a transmission protocol.

28. The voice conference system according to one of claims 13 to 27, wherein a base conference block (20, 22, 70, 90) with a predetermined number of signal ports (72, 92) is formed by coupling several subconference blocks (50), each comprising less than the predetermined number of signal ports (52),
wherein a subconference block (50) is formed such that, at each signal port (52), optionally a terminal (24, 26), another subconference block (50) or a base conference block (20, 22, 70, 90) may be coupled using coupling means.

29. A method for operating a distributed voice conference system with two base conference blocks (20, 22) coupled to each other via a signal port each according to one of claims 13 to 28, comprising:
reading the digitalized voice signals from the inputs of the two or more signal ports of a first base conference block (20) which are coupled to the terminals (24, 26);
reading the digitalized voice signals from the inputs of the two or more signal ports of a second base conference block (22) which are coupled to the terminals (24, 26);
calculating a first sum value from the read digitalized voice signals of the first base conference block (20);
calculating a second sum value from the read digitalized voice signals of the second base conference block (22);
outputting the first sum value at the output of the signal port of the first base conference block (20), which is coupled to a signal port of the second base conference block (22);
outputting the second sum value at the output of the signal port of the second base conference block (22), which is coupled to a signal port of the first base conference block (20);
reading the second sum value from the input of the signal port of the first base conference block (20), which is coupled to a signal port of the second base conference block (22);
reading the first sum value from the input of the signal port of the second base conference block (22), which is coupled to a signal port of the first base conference block (20);
calculating output values at the outputs of the signal ports of the first base conference block (20) connected to a terminal (24, 26) by the summation of the values read from the inputs of the respective other signal ports of the first base conference block (20) including the second sum value transmitted from the second base conference block (22);
calculating output values at the outputs of the signal ports of the second base conference block (22) connected to a terminal (24, 26) by the summation of the values read from the inputs of the respective other signal ports of the second base conference block (22) including the first sum value transmitted from the first base conference block (20); and
outputting the output values at the outputs of the signal ports of the two base conference blocks (20, 22), which are coupled to terminals (24, 26).

## Revendications

1. Dispositif de conférence verbale aux caractéristiques suivantes:
au moins un bloc de conférence de base (20, 22, 50) présentant trois portes de signal (52) ou plus comprenant, chacune, une entrée (54) de signal vocal numérisé et une sortie (56) de signal vocal numérisé,
un bloc de conférence de base (20, 22, 50) étant conçu de sorte que puisse être couplé à une porte de signal (52), à l'aide d'un moyen de couplage (27, 29, 31), alternativement un terminal (24, 26) ou un autre bloc de conférence de base (20, 22, 50), pour réaliser un dispositif de conférence verbale (10) élargi en ce qui concerne le nombre de participants ou spatialement, et
un bloc de conférence de base (20, 22, 50) étant conçu de manière à permettre une conférence verbale entre les terminaux (26) ou blocs de conférence de base (20, 22, 50) couplés à ce dernier; et
un moyen de couplage à distance (31) qui est conçu de manière à coupler un bloc de conférence de base (20, 22, 50) à au moins un autre bloc de conférence de base (20, 22, 50) distant dans l'espace, pour permettre une conférence verbale étendue dans l'espace,
le moyen de couplage à distance (31) étant par ailleurs conçu pour une transmission de données de synchronisation, de manière à synchroniser des cycles d'émission de parties mobiles (PP1, PP2, PP3, PP4, PP5, PP6, PP7, PP8, PP17, PP18, PP19, PP20) se trouvant en contact avec différents dispositifs de conférence verbale (12, 14).

2. Dispositif de conférence verbale selon la revendication 1, dans lequel le moyen de couplage à distance (31) est conçu de manière à coupler un bloc de conférence de base (20, 22, 50) avec au moins deux autres blocs de conférence de base (20, 22, 50) distants dans l'espace, auxquels sont couplés des terminaux (26), pour permettre une conférence verbale entre les terminaux (26) couplés à en tout au moins trois blocs de conférence de base (20, 22, 50) répartis dans l'espace.

3. Dispositif de conférence verbale selon la revendication 1 ou 2, dans lequel un bloc de conférence de base (20, 22, 50) est conçu de sorte qu'à chaque sortie (56) d'une porte de signal (52) soit présent de forme numérique un signal de somme formé de manière numérique des signaux d'entrée aux entrées (54) des autres portes de signal (52) respectives.

4. Dispositif de conférence verbale selon l'une des revendications 1 à 3, dans lequel l'un des moyens de couplage comprend un moyen de couplage radioélectrique (29) qui est conçu de sorte qu'un terminal (26) puisse être couplé par une .connexion sans fil à un bloc de conférence de base (20, 22, 50).

5. Dispositif de conférence verbale selon la revendication 4, dans lequel le moyen de couplage radioélectrique (29) est conçu de sorte qu'il permette une connexion sans fil entre le dispositif de conférence verbale et un terminal (26) selon la norme DECT ou une norme s'inspirant de cette dernière.

6. Dispositif de conférence verbale selon l'une des revendications 1 à 5, dans lequel un poste téléphonique (24) est couplé, par l'intermédiaire d'un moyen (27) pour convertir des signaux analogiques en signaux numériques et un moyen pour convertir des signaux numériques en signaux analogiques, au bloc de conférence de base (20, 22, 50).

7. Dispositif de conférence verbale selon l'une des revendications 1 à 6, dans lequel le moyen de couplage à distance (31) est conçu de sorte qu'au moins un autre bloc de conférence de base (22, 50) puisse être couplé par l'intermédiaire d'une connexion sans fil à un premier bloc de conférence de base (20, 50).

8. Dispositif de conférence verbale selon l'une des revendications 1 à 7, dans lequel le moyen de couplage à distance (31) est conçu de sorte qu'au moins un autre bloc de conférence de base (22, 50) puisse être couplé par l'intermédiaire d'un bus câblé (30) à un premier bloc de conférence de base (20, 50).

9. Dispositif de conférence verbale selon la revendication 8, le bus câblé (30) étant conçu pour une transmission de plusieurs canaux de parole en multiplex temporel.

10. Dispositif de conférence verbale selon l'une des revendications 1 à 9, dans lequel le bloc de conférence de base (20, 22, 50) est réalisé par un processeur en rapport avec un logiciel d'exploitation approprié.

11. Dispositif de conférence verbale selon la revendication 10, le processeur étant simultanément utilisé pour au moins l'une des tâches suivantes:
mise à disposition d'une surface d'utilisateur,
codage de données,
réalisation d'un protocole de transmission.

12. Dispositif de conférence verbale selon l'une des revendications 1 à 11, dans lequel un bloc de conférence de base (20, 22, 70, 90) avec un nombre déterminé de portes de signal (72, 92) est formé en ce que plusieurs sous-blocs de conférence (50) présentant, chacun, moins de portes de signal (52) que le nombre prédéterminé, sont couplés entre eux,
un sous-bloc de conférence (50) étant conçu de sorte qu'à une porte de signal (52) puisse être couplé, à l'aide d'un moyen de couplage (27, 29, 31), alternativement un terminal (24, 26), un autre sous-bloc de conférence (50) ou un bloc de conférence de base (20, 22, 70, 90).

13. Système de conférence verbale aux caractéristiques suivantes:
au moins deux blocs de conférence de base (20, 22) séparés dans l'espace et présentant trois portes de signal (72, 92) ou plus comprenant, chacune, une entrée de signal vocal numérisé et une sortie de signal vocal numérisé,
un bloc de conférence de base (20, 22) étant conçu de sorte que puisse être couplé à une porte de signal (72, 92), à l'aide d'un moyen de couplage (27, 29, 31), alternativement un terminal (24, 26) ou un autre bloc de conférence de base (20, 22), pour réaliser un dispositif de conférence verbale élargi en ce qui concerne le nombre de participants ou spatialement, et
un moyen de couplage à distance (31) par lequel les blocs de conférence de base peuvent être couplés entre eux,
le moyen de couplage à distance (31) étant par ailleurs conçu pour une transmission de données de synchronisation, de manière à synchroniser des cycles d'émission de parties mobiles (PP1, PP2, PP3, PP4, PP5, PP6, PP7, PP8, PP17, PP18, PP19, PP20) se trouvant en contact avec différents blocs de conférence verbale (12, 14).

14. Système de conférence verbale selon la revendication 13, comprenant au moins trois blocs de conférence de base (20, 22) qui sont séparés spatialement.

15. Système de conférence verbale selon la revendication 13 ou 14, dans lequel au moins deux des blocs de conférence de base (20, 22) sont couplés entre eux par une connexion sans fil.

16. Système de conférence verbale selon l'une des revendications 13 à 15, dans lequel au moins deux des blocs de conférence de base (20, 22) sont couplés entre eux par un bus câblé (30).

17. Système de conférence verbale selon la revendication 16, le bus câblé (30) étant conçu pour la transmission de plusieurs canaux de parole en multiplex temporel.

18. Système de conférence verbale selon l'une des revendications 13 à 17, le système de conférence verbale ayant au moins deux terminaux (24, 26), entre tous les terminaux existant une connexion verbale en duplex.

19. Système de conférence verbale selon l'une des revendications 13 à 18, dans lequel un ou plusieurs des terminaux (26) sont couplés par une connexion sans fil à un bloc de conférence de base.

20. Système de conférence verbale selon la revendication 19, dans lequel la connexion sans fil avec un ou plusieurs terminaux (26) a lieu selon la norme DECT ou une norme s'inspirant de cette dernière.

21. Système de conférence verbale selon l'une des revendications 13 à 20, dans lequel un ou plusieurs des blocs de conférence de base (20, 22) font partie d'une station de base DECT (12, 14).

22. Système de conférence verbale selon l'une des revendications 13 à 21, dans lequel un ou plusieurs des terminaux sont des stations mobiles DECT (26).

23. Système de conférence verbale selon la revendication 21 et 22, dans lequel les stations de base DECT (12, 14) et les stations mobiles DECT (26) coïncident en matériel.

24. Système de conférence verbale selon l'une des revendications 13 à 23, dans lequel un poste téléphonique (24) est couplé, par l'intermédiaire d'un moyen (27) pour convertir des signaux analogiques en signaux numériques et un moyen (27) pour convertir des signaux numériques en signaux analogiques, au bloc de conférence de base (20, 22, 50).

25. Système de conférence verbale selon l'une des revendications 13 à 24, dans lequel un bloc de conférence de base (20, 22, 50) est conçu de sorte qu'à chaque sortie (56) d'une porte de signal (52) soit présent de forme numérique un signal de somme formé de manière numérique des signaux d'entrée des autres portes de signal (52) respectives.

26. Système de conférence verbale selon l'une des revendications 13 à 25, dans lequel un bloc de conférence de base (20, 22, 50) est réalisé par un processeur en rapport avec un logiciel d'exploitation approprié.

27. Système de conférence verbale selon la revendication 26, le processeur étant simultanément utilisé pour au moins l'une des tâches suivantes:
mise à disposition d'une surface d'utilisateur,
codage de données,
réalisation d'un protocole de transmission.

28. Système de conférence verbale selon l'une des revendications 13 à 27, dans lequel un bloc de conférence de base (20, 22, 70, 90) avec un nombre déterminé de portes de signal (72, 92) est formé en ce que plusieurs sous-blocs de conférence (50) présentant, chacun, moins de portes de signal (52) que le nombre prédéterminé, sont couplés entre eux,
un sous-bloc de conférence (50) étant conçu de sorte qu'à chaque porte de signal (52) puisse être couplé, à l'aide d'un moyen de couplage (27, 29, 31), alternativement un terminal (24, 26), un autre sous-bloc de conférence (50) ou un bloc de conférence de base (20, 22, 70, 90).

29. Procédé pour faire fonctionner un système de conférence verbale réparti avec deux blocs de conférence de base (20, 22), couplés entre eux par l'intermédiaire, chacun, d'une porte de signal, selon l'une des revendications 13 à 28, aux étapes suivantes consistant à:
lire les signaux vocaux numérisés des entrées des deux ou plusieurs portes de signal d'un premier bloc de conférence de base (20) qui sont couplées aux terminaux (24, 26);
lire les signaux vocaux numérisés des entrées des deux ou plusieurs portes de signal d'un deuxième bloc de conférence de base (22) qui sont couplées aux terminaux (24, 26);
calculer une première valeur de somme à partir des signaux vocaux numérisés lus du premier bloc de conférence de base (20);
calculer une deuxième valeur de somme à partir des signaux vocaux numérisés lus du deuxième bloc de conférence de base (22);
sortir la première valeur de somme à la sortie de la porte de signal du premier bloc de conférence de base (20) qui est couplée à une porte de signal du deuxième bloc de conférence de base (22);
sortir la deuxième valeur de somme à la sortie de la porte de signal du deuxième bloc de conférence de bases (22) qui est couplée à une porte de signal du premier bloc de conférence de base (20);
lire la deuxième valeur de somme de l'entrée de la porte de signal du premier bloc de conférence de base (20) qui est couplée à une porte de signal du deuxième bloc de conférence de base (22);
lire la première valeur de somme de l'entrée de la porte de signal du deuxième bloc de conférence de base (22) qui est couplée à une porte de signal du premier bloc de conférence de base (20);
calculer des valeurs de sortie aux sorties des portes de signal, reliées à un terminal (24, 26), du premier bloc de conférence de base (20) en formant la somme des valeurs lues des entrées des autres portes de signal respectives du premier bloc de conférence de base (20), y compris la deuxième valeur de somme transmise par le deuxième bloc de conférence de base (22);
calculer des valeurs de sortie aux sorties des portes de signal, reliées à un terminal (24, 26), du deuxième bloc de conférence de base (22) en formant la somme des valeurs lues des entrées des autres portes de signal respectives du deuxième bloc de conférence de base (22), y compris la première valeur de somme transmise par le premier bloc de conférence de base (20); et
sortir les valeurs de sortie aux sorties des portes de signal des deux blocs de conférence de base (20, 22) qui sont couplées aux terminaux (24, 26).
